# FASCICULE DE BREVET EUROPEEN

(11) **EP 0 566 454 B1**
(45) Date de publication et mention de la délivrance du brevet: **10.12.1997**
(21) Numéro de dépôt: 93400921.8
(22) Date de dépôt: 08.04.1993
(51) Int. Cl.: H04N 7/087, H04N 7/00

(54) **Procédé de gestion d'une ressource de diffusion**
Verfahren zur Verwaltung von Rundfunkübertragungen
Method of for broadcast resource management

(30) Priorité: 15.04.1992 FR 9204631
(43) Date de publication de la demande: 20.10.1993
(73) Titulaire: TELEDIFFUSION DE FRANCE, société anonyme, 75015 Paris (FR)
(72) Inventeur: Meillan, Philippe, F-77210 Avon (FR)
(74) Mandataire: Keib, Gérard

(56) Documents cités:
- WO-A-88/04507
- WO-A-91/20157
- GB-A- 2 210 526
- US-A- 4 894 714
- EUROPEAN BROADCASTING UNION, SPB 438 31 Octobre 1987, BRUXELLES pages 1 - 37 'modifications to ebu doc. tech. 3258'
- IBA TECHNICAL REVIEW no. 24, 30 Novembre 1988, WINCHESTER GB pages 50 - 54 'high priority information-line 625'

## Description

La présente invention a pour objet un procédé et un dispositif de gestion d'une ressource de diffusion de services sur une pluralité de canaux.

Les systèmes de diffusion de données sur signal TV actuellement exploités, et qui sont strictement unidirectionnels, ne prévoient pas de mécanisme permettant de gérer de manière commune la ressource, ni d'affecter celle-ci de manière dynamique.

L'aspect dynamique de la ressource n'est présent qu'à travers la gestion des débits des services offerts par les techniques de multiplexage de paquets permettant d'inclure dans ceux-ci des segments de données de longueur variable.

Par ailleurs, les possibilités de gestion commune (en « pool ») des ressources n'existent que dans le contexte de réseaux bidirectionnels qui prévoient des mécanismes de configuration des terminaux connectés.

Les systèmes de diffusion de données sur signal TV comprennent, outre des signaux d'émission de télévision, des signaux de service comme par exemple des signaux de télétexte. Les pages de télétexte peuvent être utilisées pour programmer l'enregistrement automatique d'un programme sur un magnétoscope, en déclenchant automatiquement celui-ci lorsque les signaux de télétexte accompagnant le programme sélectionné correspondent aux données sélectionnées et mémorisées par l'utilisateur. Un tel système est décrit dans la demande de Brevet International n° WO-A-88 04507. Des signaux de service peuvent être prévus par exemple en suppression de trame (norme D2MAC), ou bien dans un multiplex paquets (tous systèmes selon la norme MAC).

Dans l'état actuel des choses, un récepteur ou un terminal est calé sur un canal de réception sélectionné qui comporte le service qui doit être exploité. La spécification des systèmes de la famille MAC/PAQUET définit le mécanisme des transports de services de diffusion de données dans le multiplex à l'aide d'un protocole GPD ("General Purpose Data"). Le mécanisme d'acquisition prévu dans le protocole GPD permet au récepteur d'identifier l'adresse du service de données choisi dans le canal sélectionné. Il en résulte qu'un service ne peut pas être transféré sur un autre canal, ce qui exclut toute possibilité d'exploiter de manière commune la ressource disponible sur l'ensemble des canaux d'un système de diffusion de données.

La présente invention a ainsi pour objet de résoudre le problème de la gestion commune de la ressource sur un tel ensemble de canaux.

L'invention concerne tout d'abord un procédé de gestion d'une ressource de diffusion de service sur une pluralité de canaux dont chacun présente une pluralité de services, caractérisé en ce qu'il comporte une étape permettant de générer dans chacun desdits canaux un service spécialisé comportant une liste d'identification des services diffusés sur l'ensemble de tous les canaux. Le procédé comporte, dans le cas d'un changement de configuration des canaux, une étape pour transmettre au préalable, par chacun desdits services spécialisés, une liste d'identification de la nouvelle configuration des services de tous les canaux.

Dans le cas où chacun des canaux présente un service dédié comportant une liste des services du canal correspondant, le procédé selon l'invention est avantageusement organisé de manière telle que le service dédié comporte un adressage du service spécialisé permettant d'atteindre celui-ci après acquisition du service dédié. Cette double procédure d'acquisition permet également une modification d'adresse du service spécialisé, et de manière indépendante entre les canaux.

Selon un mode de réalisation préféré, l'invention concerne également un procédé d'exploitation des services diffusés sur une pluralité de canaux dont chacun a été traité selon le procédé de gestion ci-dessus et présente une pluralité de services, qui est caractérisé par des étapes d'acquisition d'un service spécialisé généré dans chacun desdits canaux,de mémorisation d'au moins une liste d'identification contenue dans ledit service spécialisé, et de sélection d'un service à partir de ladite liste d'identification. D'autre part, la détection de l'interruption d'un canal sélectionné et la production d'un signal de détection d'interruption peuvent donner lieu à la commutation de la réception sur un autre canal en cas de détection d'interruption. A partir de là, l'acquisition d'un service dédié comportant une liste des services du canal sélectionné peut donner lieu à l'adressage du service spécialisé à partir de ladite liste des services du canal sélectionné.

D'autres caractéristiques et avantages de l'invention apparaîtront à la lecture de la description qui va suivre, donnée à titre d'exemple non limitatif, en liaison avec les dessins qui représentent :
- la figure 1, une acquisition d'un service spécialisé selon l'invention pour la gestion commune d'un service de données,
- la figure 2a, un paquet de données et les figures 2b et 2c, les formats d'un service spécialisé selon l'invention, respectivement en suppression de trame et en multiplex paquet,
- la figure 3, un dispositif d'émission et un dispositif de réception selon l'invention.

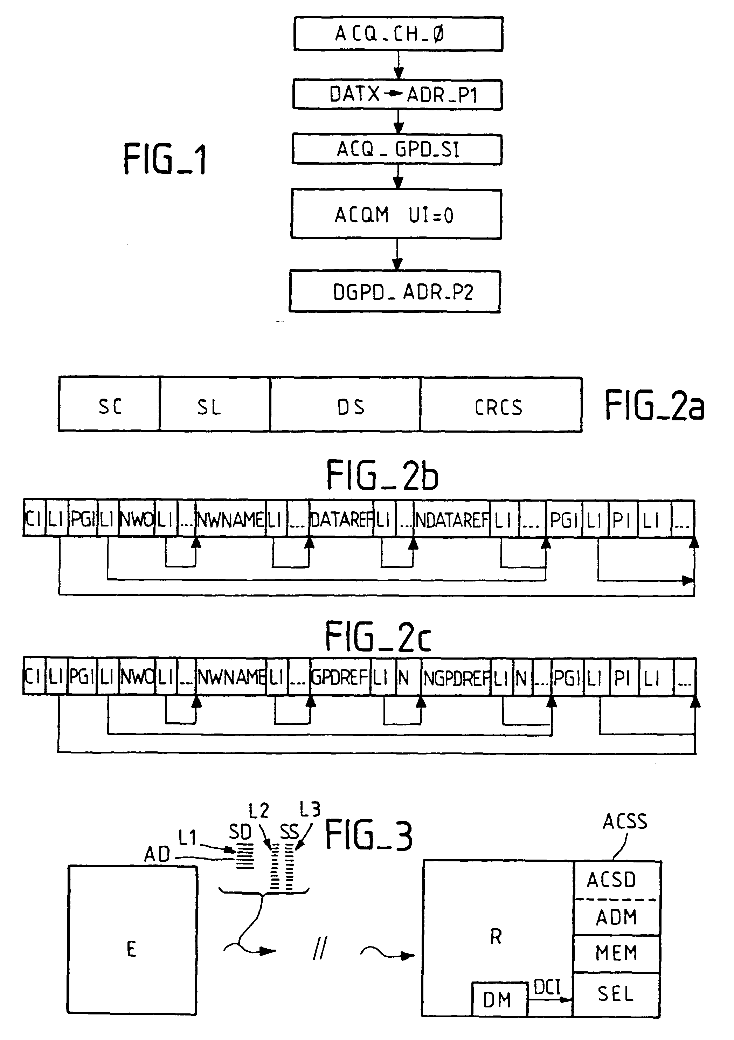

La figure 1 illustre une procédure d'acquisition d'un service spécialisé dans le cadre de la norme MAC/PAQUET. Dans cette configuration, le service spécialisé SS, qui liste l'ensemble des services disponibles sur l'ensemble des canaux, est un des services du canal et son acquisition est réalisée par une procédure classique mettant en oeuvre l'acquisition préalable d'un service dédié SD dans le canal 0. La première étape ACQ-CH-0 consiste, dans le canal sélectionné, en l'acquisition du service dédié dénommé "CH-0" en raison de son code d'adresse. Ce service CH-0 comporte trois sortes d'informations, à savoir l'identification du réseau, la liste des services disponibles sur le canal sélectionné, ainsi que la configuration du service. Ensuite, la deuxième étape consiste à identifier le service dédié comportant la liste des services disponibles sur le canal par la procédure DATX de manière à obtenir l'adresse ADR-P1 du paquet contenant le service dédié SD listant les services disponibles sur le canal. L'étape suivante consiste, à partir de cette adresse ADR-P1 de réaliser l'acquisition du service dédié SD à l'aide du protocole GPD-SI. Cette acquisition permet, de manière connue en soi, d'accéder à l'ensemble des services disponibles sur le canal. Pour acquérir le service spécialisé SS, on procède à l'étape suivante ACQM d'acquisition du message correspondant à l'adresse, par exemple UI = 0 du service spécialisé SS. L'étape suivante permet l'identification du service par l'adresse ADR-P2 du paquet comportant le service SS.

A l'aide des informations présentes dans la voie de service SS, le récepteur ou le terminal constitue, pour chaque canal du multiplex, deux tables, à savoir :
- une liste des services qui sont actuellement diffusés sur le canal, et plus précisément une liste des adresses de ces services ;
- une liste des services qui seront diffusées sur le canal dans la prochaine configuration d'exploitation du multiplex MAC/PAQUET.

Le terminal tient ces tables à jour en exploitant les informations reçues. Le changement de configuration est signalé par un mécanisme analogue au mécanique UPDATE de changement des configurations dans les systèmes MAC/PAQUET.

Le terminal exploite ses tables pour tenir à jour la désignation du canal dans la prochaine configuration du multiplex et pour déterminer, le cas échéant, le canal sur lequel est diffusé un service qu'il est demandé au terminal d'exploiter. De la sorte, lors du changement de configuration du multiplex de canaux, le terminal commute automatiquement sur la démodulation du canal qui lui permettra de poursuivre l'exploitation de ses services. La seule contrainte est que les services destinés à être exploités par un même terminal soient diffusés sur le même canal.

L'interruption de la diffusion d'un service sur l'un des canaux du multiplex de canaux est signalée par une commande spécifique diffusée dans le service spécialisé SS avec les données du service. Ceci permet au terminal, indépendamment du mécanisme UPDATE, d'être informé de l'interruption du service, et le terminal commute alors vers le canal sur lequel le service est transporté. En cas d'interruption fortuite, et donc non signalée d'un service, le terminal commute automatiquement sur un autre canal quelconque. Il entreprend alors une procédure analogue à la phase de connexion décrite en référence à la figure 1 en acquérant la voie de service SD, puis en commutant si nécessaire sur le canal transportant le ou les services à exploiter.

Les paquets de données (figure 2a) comportent un indice de continuité SC pour identifier le numéro du segment, une indication SL de la longueur du paquet, un segment de données DS transportant les commandes de la figure 2a ou 2b et un segment CRCS de contrôle cyclique de redondance comportant un code CRC de correction d'erreurs.

La figure 2b représente le format de la voie de service spécialisée réalisé en suppression de trame dans le cadre de la norme D2 MAC PAQUET. Le dictionnaire des commandes est le suivant :
- CI = identificateur de commande,
- LI = longueur de la commande,
- PGI = groupe de paramètres,
- NWO = origine du réseau, c'est-à-dire le numéro du canal,
- NWNAME = nom du canal,
- DATAREF = adresse d'un service,
- NDATAREF = adresse future du même service.

Pour chaque canal identifié par le paramètre NWNAME, chacun des services est identifié par son adresse DATAREF et son adresse future éventuelle NDATAREF. La procédure UPDATE mentionnée ci-dessus est identifiée dans les groupes de paramètres PGI.

La figure 2c représente le format de la voie de service spécialisé dans un multiplex paquet pour les systèmes selon la norme MAC. Le format est sensiblement identique de celui de la figure 2b, à ceci près que les adresses du service sont maintenant référencées GPDREF pour l'adresse d'un service, et NGPDREF pour l'adresse future du même service.

Selon la figure 3, un émetteur E émet un multiplex de canaux dans lequel chaque canal comporte un service dédié SD présentant une liste L1 comportant les services diffusés sur le canal considéré, et notamment l'adresse AD du service spécialisé SS qui comporte une liste L2 de l'ensemble des services de l'ensemble des canaux dans la configuration actuelle, et une liste L3 de l'ensemble des services sur l'ensemble des canaux dans une éventuelle configuration future.

Le récepteur R comporte un programme d'acquisition d'un service spécialisé ACSS comportant un moyen programmé d'acquisition ACSD des services dédiés SD et un moyen d'adressage ADM pour acquérir le service spécialisé SS à partir du service dédié SD. Une mémoire MEM permet au récepteur R de mémoriser les listes L2 et L3. Un dispositif SEL de sélection automatique de canaux permet, de manière connue en soi, de caler le récepteur R sur la fréquence d'un canal sélectionné. Un moyen DM de détection d'interruption d'un canal sélectionné émet un signal de détection d'interruption DCI vers le moyen de sélection SEL qui est programmé pour se commuter dans ce cas sur un autre canal quelconque, par exemple le canal suivant. Le signal de détection d'interruption DCI peut être produit de diverses manières, par exemple en constatant l'apparition sur la liste L3, d'une nouvelle adresse du service concerné, de manière à réaliser une commutation prévue à l'avance, et/ou par constatation de l'absence dans le multiplex, des signaux de synchronisation du service qui doit être exploité.

## Revendications

1. Procédé de gestion d'une ressource de diffusion de services sur une pluralité de canaux dont chacun présente une pluralité de services, caractérisé en ce qu'il comporte une étape permettant de générer dans chacun desdits canaux un service spécialisé (SS) comportant une liste d'identification (L2) des services diffusés sur l'ensemble de tous les canaux, et en ce que, dans le cas d'un changement de configuration des canaux, il comporte une étape permettant de transmettre par chacun desdits services spécialisés (SS), une liste d'identification (L3) de la nouvelle configuration des services de tous les canaux.

2. Procédé selon la revendication 1, caractérisé en ce que chacun des canaux présente un service dédié (SD) comportant une liste (L1) des services du canal correspondant et en ce que le service dédié (SD) comporte un adressage (AD) du service spécialisé (SS) permettant d'atteindre celui-ci après acquisition du service dédié (SD).

3. Procédé selon la revendication 1 ou 2, caractérisé en ce qu'il comporte en plus les étapes suivantes d'exploitation de services diffusés :
. acquisition d'un service spécialisé (SS) généré dans chacun desdits canaux,
. mémorisation d'au moins une liste d'identification (L2,L3) contenue dans ledit service spécialisé (SS), et
. sélection d'un service à partir de ladite liste d'identification (L2,L3).

4. Procédé selon la revendication 3, caractérisé en ce qu'il comporte les étapes suivantes :
. détection de l'interruption d'un canal sélectionné et production d'un signal de détection d'interruption, et
. commutation de la réception sur un autre canal en cas de détection d'interruption.

5. Procédé selon la revendication 3 ou 4, caractérisé en ce qu'il comporte les étapes suivantes :
. acquisition d'un service dédié (SD) comportant une liste (L1) des services du canal sélectionné, et
. adressage du service spécialisé (SS) à partir de ladite liste (L1) des services du canal sélectionné.

## Patentansprüche

1. Verfahren zur Verwaltung einer Übertragungsquelle für Datendienste auf einer Vielzahl von Kanälen, von denen jeder eine Vielzahl von Diensten aufweist,
**dadurch gekennzeichnet**,
daß es einen Schritt aufweist, der es ermöglicht, in jedem der Kanäle einen anwendungsspezialisierten Dienst (SS) mit einer Identifikationsliste (L2) der auf der Gesamtheit aller Kanäle übertragenen Dienste zu verwalten, und daß es in dem Fall einer Konfigurationsänderung der Kanäle einen Schritt aufweist, der es ermöglicht, durch jeden der anwendungsspezialisierten Dienste (SS) eine Identifikationsliste (L3) der neuen Konfiguration der Dienste aller Kanäle zu übermitteln.

2. Verfahren gemäß Anspruch 1, dadurch gekennzeichnet, daß jeder der Kanäle einen dedizierten Dienst (SD) mit einer Liste (L1) der Dienste des entsprechenden Kanals aufweist, und daß der dedizierte Dienst (SD) eine Adressierung (AD) des anwendungsspezialisierten Dienstes (SS) aufweist, die ermöglicht diesen nach Erfassung des dedizierten Dienstes (SD) zu erreichen.

3. Verfahren gemäß Anspruch 1 oder 2, dadurch gekennzeichnet, daß es außerdem die Auswertungsschritte für die übertragenen Dienste aufweist:
- Erfassung eines anwendungsspezialisierten Dienstes (SS), der in jedem der Kanäle verwaltet wird,
- Speichern von wenigstens einer Identifikationsliste (L2, L3), die in dem anwendungsspezialisierten Dienst (SS) enthalten ist, und
- Auswahl eines Dienstes anhand der Identifikationsliste (L2, L3).

4. Verfahren gemäß Anspruch 3, dadurch gekennzeichnet, daß es die folgenden Schritte aufweist:
- Erfassung der Unterbrechung eines ausgewählten Kanals und Erzeugung eines Unterbrechungserfassungssignals, und
- Umschalten des Empfangs auf einen anderen Kanal im Falle der Unterbrechungserfassung.

5. Verfahren gemäß Anspruch 3 oder 4, dadurch gekennzeichnet, daß es die folgenden Schritte aufweist:
- Erfassung eines dedizierten Dienstes (SD) mit einer Liste (L1) der Dienste des ausgewählten Kanals, und
- Adressierung des anwendungsspezialisierten Dienstes (SS) anhand der Liste (L1) der Dienste des ausgewählten Kanals.

## Claims

1. Method for managing a resource for broadcasting services on a plurality of channels, each of which has a plurality of services, characterized in that it includes a step for generating, in each of the said channels, a specialized service (SS) including a list (L2) identifying the services broadcast over all the channels, and in that, in the event of a change in the configuration of the channels, it includes a step for transmitting, via each of the said specialized services (SS), a list (L3) identifying the new configuration of the services of all the channels.

2. Method according to Claim 1, characterized in that each of the channels has a dedicated service (SD) including a list (L1) of the services of the corresponding channel, and in that the dedicated service (SD) includes an address (AD) of the specialized service (SS), making it possible to reach it after acquisition of the dedicated service (SD).

3. Method according to Claim 1 or 2, characterized in that it furthermore includes the steps of utilizing broadcast services:
• acquisition of a specialized service (SS) generated in each of the said channels,
• storage of at least one identification list (L2,L3) contained in the said specialized service (SS), and
• selection of a service from the said identification list (L2,L3).

4. Method according to Claim 3, characterized in that it includes the following steps:
• detection of the interruption of a selected channel and production of an interrupt-detection signal, and
• switching the reception to another channel in the event of interrupt detection.

5. Method according to Claim 3 or 4, characterized in that it includes the following steps:
• acquisition of a dedicated service (SD) including a list (L1) of the services of the selected channel, and
• addressing of the specialized service (SS) from the said list (L1) of the services of the selected channel.
